# EUROPEAN PATENT APPLICATION

(11) **EP 4 737 224 A1**
(43) Date of publication of application: **06.05.2026**
(21) Application number: 24209849.9
(22) Date of filing: 30.10.2024
(51) Int. Cl.: B60R 21/0132, B62J 27/20, B63C 9/125, B60R 21/01

(54) **A METHOD OF OPERATING A VEHICLE SAFETY SYSTEM, A VEHICLE SAFETY SYSTEM AND A WEARABLE**

(71) Applicant: Autoliv Development AB, 447 83 Vårgårda (SE)
(72) Inventor: JOHANSSON, Filip, 447 83 VÅRGÅRDA (SE); LE-MERRER, Yann, 75020 Paris (FR)
(74) Representative: AWA Sweden AB

(57) **Abstract**

A method (1000) of operating a vehicle safety system, the method (1000) comprising: sensing (S1100) movement of a vehicle (100) by one or more sensors (106; 205) and generating movement data; evaluating (S1200) the movement data by an ECU (Electronic Control Unit) to determine if the movement data is representing a crash; and in the event it is determined by the ECU that the movement data is representing a crash, operating a crash detection master communication device (500) of the vehicle (100) to communicate with a slave communication device (600) that is operable connected to an actuator (202) of a first safety arrangement (201) that is arranged in a wearable (200), to thereby initiate deployment an inflatable airbag (204) forming part of said first safety arrangement (201). Also, a vehicle safety system (1) and a wearable (200) to be part of such system is provided.

## Description

### Technical field

The present invention refers to a method of operating a vehicle safety system, a vehicle safety system, and a wearable to be used in such vehicle safety system.

### Technical background

It is well known with wearables having one or more integrated inflatable airbags. The wearable may by way of example be a helmet or a garment. Non-limiting examples of such garments are vests, jackets, overalls, trousers, a harness, or a backpack. The airbag is configured to be inflated and deployed upon the detection and determination of an abnormal situation, such as a crash, to thereby protect one or more body parts of the wearer. This means that the wearable comprises a crash detection system with one or more sensors and an Electrical Control Unit with a processor that communicates with and controls the airbag actuator. Correspondingly, it is well known to provide a vehicle, such as a motorcycle, with an airbag system, which in turn comprises its own crash detection system.

Hence, each such wearable and each such vehicle comprises its own independent crash detection system with its own sensors, algorithms and logics, where each crash detection system decides independently. This causes a number of issues. There is a redundancy of parts. There is a higher risk of failure, or non-optimal protection interaction since each protection is deployed independently of each other without any synchronization. The crash detection systems operate in different decision environments, where the wearable only detects motion of the user and not the vehicle, and vice versa. This causes a delay and also possible misclassification of sensor data. And, not at least, the user must check each protection system individually.

There is accordingly a need for a simplified safety system that is developed for a vehicle arrangement where the user today is using a wearable to provide a body protection.

### Summary

It is an object of the present invention to provide a method of operating a vehicle safety system where the user is using a wearable to provide a body protection.

Another object is to provide a method that allows operation of a vehicle safety system for a vehicle arrangement where two or more airbag systems, worn or supported by different entities (vehicle and user) of the vehicle arrangement, are allowed to operate in a synchronized manner.

Yet another objective, is to provide a vehicle safety system that is useful for a vehicle on which one or more passengers are intended to be seated in a non-restrained manner, i.e., non-belted, and where the one or more passengers wear a wearable having an inflatable airbag.

Still another object is to provide a wearable to be used in such vehicle safety system.

These and other objects that will be apparent from the following summary and description are achieved by a method of operating a vehicle safety system, the method comprising:
sensing movement of a vehicle by one or more sensors and generating movement data;
evaluating the movement data by an ECU (Electronic Control Unit) to determine if the movement data is representing a crash; and
in the event it is determined by the ECU that the movement data is representing a crash, operating a crash detection master communication device of the vehicle to communicate with a slave communication device that is operable connected to an actuator of a first safety arrangement that is arranged in a wearable, to thereby initiate deployment of an inflatable airbag forming part of said first safety arrangement.

In the context of the invention, the term *"vehicle"* is to be understood as a vehicle on which one or more passengers are configured to be seated in a non-restrained manner, i.e., in a non-belted manner. The vehicle may be a road vehicle, a snow vehicle or a water vehicle. The road vehicle may be a two, three or four wheeled bike or motorcycle. The snow vehicle may be a snowmobile. The water vehicle may be a jet ski.

In the context of the invention, the term *"wearable"* is to be understood as a helmet or a garment, where the garment may be a vest, a jacket, an overall, trousers, a harness, or a backpack, or any combination of any of these.

The invention provides a method where the deployment of the safety system of the wearable is determined based on a detected crash of the vehicle. Accordingly, the wearable is responsive to the condition of the vehicle rather than being responsive to the condition of the user wearing the wearable. Should the ECU on the vehicle determine that the vehicle is subjected to a crash, this information will be communicated from the vehicle via the crash detection master communication device of the vehicle to the slave communication device of the wearable. Such communicated instruction from the vehicle to the wearable will trigger a deployment of the inflator of the airbag integrated in the wearable, and hence an inflation and deployment of the airbag in the wearable at a time optimized to ensure optimal interaction between the two sets of restraint systems. The method allows a faster deployment of the first safety arrangement that protects the wearer as compared to known systems which are designed to react on the movement of the wearers body.

In known systems, the vehicle and the wearable typically have their own control systems in terms of detection and deployment. Further, the control system of the wearable relies, in the known systems, on a determination of an abnormal movement of the wearer, which abnormal movement is a mere result on an already occurred crash of the vehicle. Accordingly, the invention can be seen as providing an active safety system for the wearer of the wearable, rather than a reactive safety system. More precisely, the safety system of the wearable is controlled based on a determined crash of the vehicle and not based on how the body of the wearer that uses the wearable is forced to move due to the vehicle crash.

The communication between the crash detection master communication device and the slave communication device is preferably wireless. The wireless communication may by way of example be made via Bluetooth^{®} or RFID.

The ECU may be a central ECU forming part of the vehicle. Such central ECU may be connected to other sensor arrangements and safety arrangements in the vehicle, such as arrangements measuring the vehicle speed, braking force, etc.

Alternatively, or in combination, the ECU may be an ECU forming part of a second safety arrangement that is part of the vehicle and that comprises an actuator and an inflator arranged in communication with an inflatable airbag, and wherein the actuator is arranged in communication with the crash detection master communication device. That ECU may be configured to communicate with the central ECU forming part of the vehicle.

At least one of the one or more sensors may be arranged on the vehicle.

At least one of the one or more sensors may be arranged on the wearable.

Sensors may be arranged both on the vehicle and on the wearable.

No matter position of the one or more sensors, the sensors may be an accelerometer and/or a gyro sensor.

The method may comprise the additional step of determining if the wearable is arranged within a set distance range from the vehicle; and
if it is confirmed that the wearable is arranged within the set distance range, pairing the crash detection master communication device with the slave communication device to thereby establish a communication with the slave communication device.

The pairing may be made automatically. The pairing may be delayed until the vehicle is turned on. The thus established communication is preferably maintained as long as the vehicle is running, i.e., until the vehicle is turned off. This kind of pairing is well known from e.g., mobile communication devices such as phones and headsets and is not further described.

The crash detection master communication device may be configured to synchronize deployment of the first safety arrangement that is arranged in the wearable and a second safety arrangement that is arranged in the vehicle, said second safety arrangement comprising an actuator and an inflator arranged in communication with an inflatable airbag, where said actuator is arranged in communication with the crash detection master communication device.

The synchronization may be set so that the first and second safety arrangements are deployed simultaneously, or within a predefined delay depending on determined occupant size or crash severity to allow optimal interaction between both safety arrangements. The airbag of the second safety arrangement may, as a non-restricted example, be an airbag that is arranged on or adjacent the handlebar or steering column of a bike or motorcycle. The airbag of the first safety arrangement may, depending on the type of wearable, be designed to form a protection to one or more of the head, the face, the shoulders, the torso, the hips or the legs.

According to another aspect, a vehicle safety system is provided. The system comprises:
a wearable comprising a first safety arrangement comprising an actuator, and an inflator arranged in communication with the inflatable airbag;
one or more sensors; and
an ECU configured to evaluate sensor data from the one or more sensors to determine a vehicle crash; wherein
the vehicle safety system further comprises a crash detection master communication device configured to be arranged on a vehicle, which in the event the ECU should determine a vehicle crash, is configured to communicate with a slave communication device that is operable connected to the actuator of the first safety arrangement to thereby initiate deployment the first safety arrangement.

The vehicle safety system is configured to operate in the same manner as the method that has been described above. Also, the advantages described above are equally applicable to the vehicle safety system as such. Reference is made to the above to avoid undue repetition.

The crash detection master communication device may be configured to communicate with the slave node in a wireless manner.

The vehicle may comprise a second safety arrangement comprising an actuator and an inflator arranged in communication with an inflatable airbag, and the actuator may be arranged in communication with the crash detection master communication device.

The crash detection master communication device may be configured to synchronize deployment of the first and second safety arrangements; or to apply a predefined delay depending on determined occupant size or determined crash severity. Thereby an optimal interaction between both restraint systems may be allowed.

The ECU may be a central ECU forming part of the vehicle. Such central ECU may be connected to other sensor arrangements and safety arrangements in the vehicle. Examples of such other sensor arrangements are sensors to measure speed, brake force and size/weight of the occupant.

The ECU may be an ECU forming part of the second safety arrangement. The ECU may be configured to communicate with a central ECU forming part of the vehicle.

At least one of the one or more sensors may be arranged on the vehicle.

At least one of the one or more sensors may be arranged on the wearable.

Sensors may be arranged on the vehicle and on the wearable.

No matter position of the one or more sensors, the sensors may be an accelerometer and/or a gyro sensor.

The crash detection master communication device may be configured to pair with and establish a communication with the slave communication device when the wearable is arranged within a set distance range from the vehicle. The pairing may be made automatically. The pairing may be delayed to be made when the vehicle is turned on. The thus established communication is preferably maintained as long as the vehicle is running, i.e., until the vehicle is turned off. Information regarding the pairing status may be presented to the user via the vehicle dashboard or a cell phone.

The wearable may comprise an ECU configured to determine a crash based on sensor data from the one or more sensors on the wearable and to cause the first safety arrangement to deploy in the event the crash detection master communication device is not in communication with the slave communication device.

This allows the wearable to be used as a stand-alone safety system in other environments, and to maintain protection in case of loss of communication. The user can hence shift between different vehicles without bothering if that vehicle is compatible with the wearable or not.

The ECU on the wearable may be configured to apply two different crash detection methods or crash detection sensitivity methods. The two methods may be applied depending on if the ECU on the wearable is in communication or not with the crash detection master communication device.

The ECU of the vehicle may be configured to apply two different crash detection methods or crash detection sensitivity methods. The two methods may be applied separately depending on if the ECU is in communication or not with the ECU on the wearable.

The pairing communication between the crash detection master communication device and the slave communication device may comprise a message, i.e., data providing information from the slave communication device to the crash detection master communication device about the type of garment and the type of first safety arrangement that is arranged in the wearable, so that the ECU on the vehicle can adjust the activation time, i.e. deployment time of the first safety arrangement to ensure an optimal protection to the wearer during the crash.

The ECU of the vehicle can be configured to be in communication with one or more wearables.

According to yet another aspect, a wearable to be used in a vehicle safety system according to any of claims 4-11 is provided. The wearable is a helmet or a garment, and said wearable comprises:
a first safety arrangement comprising an actuator and an inflator that is arranged in communication with an inflatable airbag; and
a slave communication device configured to communicate with a remote crash detection master communication device, and wherein the slave communication device is operable connected to the actuator of the first safety arrangement to thereby allow initiation of a deployment the first safety arrangement.

The wearable is configured to operate in the same manner as the method and vehicle safety system that has been described above. Also, the advantages described above are equally applicable to the vehicle safety system. Reference is made to the above to avoid undue repetition. The remote crash detection master communication device is a device of a vehicle.

The wearable may be a helmet or a garment, where the garment is a vest, a jacket, an overall, trousers, a harness, or a backpack, or a combination thereof. The airbag may be stored in a folded and/or rolled condition in the helmet or garment. The airbag may, depending on the type of garment, be designed to form a protection to one or more of the head, the face, the shoulders, the torso, the hips or the legs.

The wearable may comprise an ECU configured to determine a crash based on sensor data from the one or more sensors on the wearable and to cause the first safety arrangement to deploy in the event the ECU should determine a crash. This allows the wearable to be used as a stand-alone safety system. Hence, it allows the user to shift between different vehicles without bothering if that vehicle is compatible with the wearable or not. Also, it allows the wearer to use wearable in other environments.

According to yet another aspect, a non-transitory computer readable storage medium is provided, said storage medium having stored thereon instructions for implementing the method according to any of claims 1-3, when executed on a device having processing capabilities. The above-mentioned features of the method, when applicable, apply to this aspect as well. Reference is made to the above to avoid undue repetition.

According to still another aspect, a software comprising the steps of the method according to any of claims 1-3 is provided. The above-mentioned features of the method, when applicable, apply to this aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The invention will be described in more detail with reference to the appended schematic drawings, which show examples of a presently preferred embodiment of the invention.
Fig. 1 is a schematic overview of one embodiment of a system according to the invention.
Fig. 2 is an example of how the ECU may be embodied.
Fig. 3 is a flowchart illustrating a method of operating a vehicle safety system according to some embodiments of the present disclosure.

### Detailed description

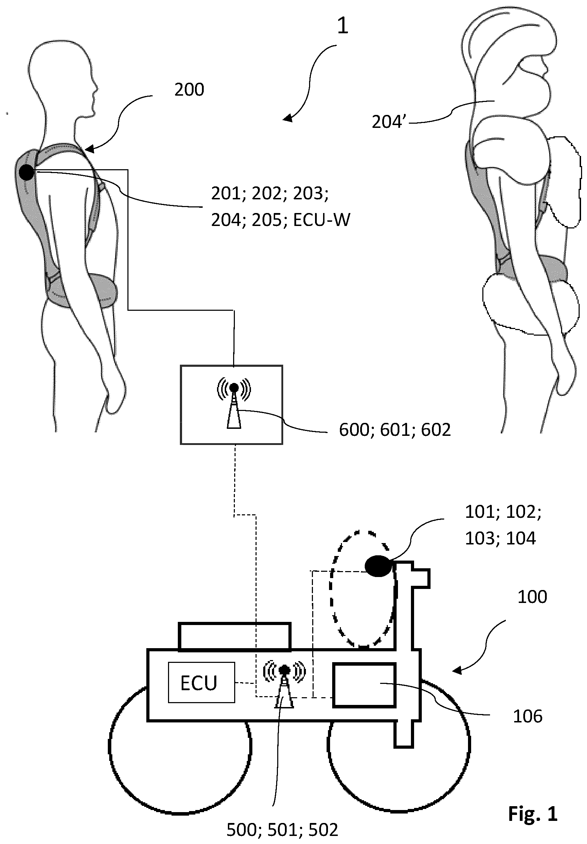

Starting with Fig. 1, a schematic overview of a vehicle safety system 1 according to the invention is disclosed. The vehicle safety system 1 comprises as its main components a vehicle 100 and a wearable 200. The wearable 200 comprises a first safety arrangement 201 comprising an actuator 202 and an inflator 203 arranged in communication with an inflatable airbag 204. The safety system 1 further comprises one or more sensors 106 on the vehicle and an ECU (Electronic Control Unit) configured to evaluate sensor data from the one or more sensors 106 to determine a vehicle crash and severity of the crash. The vehicle safety system further comprises a crash detection master communication device 500 configured to be arranged on the vehicle 100. Additionally, the vehicle safety system comprises a slave communication device 600 on the wearable 200 that is operable connected to the actuator 202 of the first safety arrangement 201 on the wearable.

As previously given, the term *"vehicle"* is, in the context of the invention, to be understood as a vehicle 100 on which one or more passengers are configured to be seated in a non-restrained manner, i.e., in a non-belted manner. The vehicle 100 may by way of example be a road vehicle, a snow vehicle or a water vehicle. The road vehicle may be a two, three or four wheeled bike or motorcycle. The snow vehicle may be a snowmobile. The water vehicle may be a jet ski. The skilled person realises that other types of vehicles may be equally applicable. The vehicle may by way of example be an autonomous vehicle transporting non-belted passengers.

The vehicle 100 may comprise an optional safety arrangement, referred to in the application as a second safety arrangement 101. The second safety arrangement 101 may comprise an actuator 102 and an inflator 103 arranged in communication with an inflatable airbag 104. The airbag 104 may, as a non-restricted example, be an airbag that is arranged on, or adjacent the handlebar or steering column of a bike or motorcycle. Such airbag 104 may be designed to provide a protection for e.g., the thorax or abdomen area of the driver.

The actuator 102 of the second safety arrangement 101 is arranged in communication with the crash detection master communication device 500 that will be further discussed below. The communication may be a wired communication or a wire-less communication.

The vehicle 100 comprises one or more sensors 106. The sensors 106 may, as non-limiting examples, be an accelerometer and/or a gyro sensor. The sensors 106 may be sensors that are dedicated to the vehicle safety system 1 according to the invention or be the sensors that are part of an overall safety system of the vehicle 100. The sensors may also be sensors detecting speed, brake force and weight or size of the passenger.

The sensors 106 are, no matter position on the vehicle 100, configured to communicate with the ECU. The ECU may be a central ECU forming part of the vehicle's 100 overall operation. Such central ECU may be connected to other sensor arrangements and safety arrangements in the vehicle 100. Examples of such arrangements are sensors for detecting speed, brake force and weight or size of the passenger.

As an alternative, the ECU may be an ECU forming part of the second safety arrangement 101. Such ECU may be configured to communicate with the central ECU forming part of the vehicle 100. It is to be understood that such ECU must not be configured to communicate with the central ECU.

The ECU may be configured to communicate with an ECU (ECU-W) forming part of the wearable 200.

The connection and hence the communication between the one or more sensors 106 on the vehicle 100 and the ECU of the vehicle, no matter if it is the central ECU forming part of the vehicle's 100 overall operation or the ECU forming part of the second safety arrangement 101, may be wired or wireless. This applies no matter the number of sensors 106 and the number of ECUs.

The crash detection master communication device 500 of the vehicle safety system 1 is arranged on the vehicle 100. It may be a device that is integrated in the vehicle 100 or a device that is mounted separately to the vehicle 100.

The master communication device 500 comprises a sender 501 and a receiver 502 that is configured to communicate with one or more ECUs on the vehicle 100 and also with the slave communication device 600 that is part of the wearable 200. The master communication device 500 may also be configured to communicate with the actuator 102 of the second safety arrangement 101. The communication between the master communication device 500 and the actuator 102 may be wired or wireless.

The master communication device 500 may comprise more than one set of a sender 501 and a receiver 502, where the more than one sets may be configured to operate by using different communication methods or different protocols. One set may by way of example operate via NFC (Near Field Communication) or RFID and one set may operate by using e.g., Bluetooth^{®} or RFID.

In the following the wearable 200 will be discussed. In the context of the invention, the term *"wearable"* may by way of example be a helmet or a garment, where the garment is a vest, a jacket, an overall, trousers, a harness, a backpack, or any combination of these. The wearable 200 is exemplified as a backpack in Fig. 1

The wearable 200 comprises a first safety arrangement 201 that comprises an actuator 202 and an inflator 203 that is arranged in communication with an inflatable airbag 204. The airbag 204 may, depending on the type of wearable, be designed to form a protection to one or more of the head, the face, the shoulders, the torso, the hips or the legs. The inflator 203 may be a gas generator or a gas-filled canister. The airbag 204 may be stored in a folded and/or rolled condition in the wearable 200.

The wearable 200 is preferably configured to be allowed to be used as a stand-alone safety arrangement that can be used in other applications or together with vehicles 100 that are not compatible with the vehicle safety system 1 of the invention. It is therefore preferred that the wearable 200 comprises at least one or more sensors 205. The sensor(s) 205 may as non-limiting examples be an accelerometer and/or a gyro sensor. Also, it is preferred that the wearable 200 comprises its own ECU, ECU-W, that is configured to determine a crash based on sensor data from the one or more sensors 205 on the wearable 200 and to cause the first safety arrangement 201 to deploy.

The wearable 200 differs from prior art wearables at least in that it further comprises a communication device, constituting a slave communication device 600. The slave communication device 600 comprises a sender 601 and a receiver 602. The slave communication device 600 is configured to communicate with the master communication device 500 on the vehicle 100. The slave communication device 600 is also configured to communicate with the actuator 202 of the first safety arrangement 201. The communication between the slave communication device 600 and the actuator 202 of the first safety arrangement 201 may be wired or wireless. The communication between the slave communication device 600 and the actuator 202 of the first safety arrangement 201 is preferably wired.

The slave communication device 600 may comprise more than one set of a sender 601 and a receiver 602, where the sets may be configured to operate by using different communication methods or different protocols. One set may by way of example operate via NFC (Near Field Communication) or via RFID and one set may operate by using e.g., Bluetooth^{®} or RFID.

The communication between the master communication device 500 and the slave communication device 600 is configured to be made in a wireless mode. One set of sender 501; 601 and receiver 502; 602 in the master and slave communication devices 500; 600 respectively can be used when pairing the wearable 200 with the vehicle 100 as will be described below. Another set of sender 501; 601 and receiver 502; 602 in the master and slave communication devices 500; 600 respectively can be used during running the vehicle 100 and hence when any crash should be determined and reacted upon.

In the following, the operation of the vehicle safety system 1 will be discussed.

The user of the vehicle 100 puts on the wearable 200 and moves towards and enters the vehicle 100.

The master communication device 500 together with the ECU and sensors 106 on the vehicle 100 search and determine if a wearable 200 of a pre-defined type is within a set distance range from the vehicle 100. The set distance range may be within a range of 0-1 meters and more preferred within 0-0.5 meters. Additional paring constraints or driver confirmation mechanism(s) may be added. Presence data is generated. The presence data may be generated e.g., by NFC, by RFID or by Bluetooth^{®}, all methods as such being well known in the art when pairing different units. The presence data may by way of example be generated by the user of the wearable 200 touching the master communication device 500 by a tag or by a mobile phone or be generated by a wireless communication between the slave communication device 600 on the wearable 200 and the master communication device 500 on the vehicle 100.

The presence data is communicated to the ECU on the vehicle 100. Further, information about the type of wearable may be communicated to the crash detection master communication device 500 on the vehicle 100.

The ECU on the vehicle evaluates the presence data and if it is confirmed that the wearable 200 is arranged within the set distance range and it is a wearable of a compatible type, the crash detection master communication device 500 pairs with the slave communication device 600 to thereby establish a communication with the slave communication device 600. The pairing may be made automatically. The pairing may be made instantly or be delayed until the vehicle 100 is turned on. The thus established communication between the wearable 200 and the vehicle 100 is preferably maintained as long as the vehicle 100 is running, i.e., until the vehicle 100 is turned off. This kind of detection and pairing is well known from e.g., mobile communication devices such as phones and headsets and is not further described. The pairing status may be presented on the vehicle dashboard or via an app in a cell phone.

The one or more sensors 106 on the vehicle 100 are during movement of the vehicle 100 configured to continuously sense movement of the vehicle 100 and generate movement data. The movement data is communicated to the ECU on the vehicle 100 and the ECU determines if this movement data is representing a crash or not. The ECU can also be configured to determine the type of crash and its severity.

In the event it is determined by the ECU that the movement data is representing a crash, the ECU operates the crash detection master communication device 500 to communicate with the slave communication device 600 that is operable connected to the actuator 202 of the first safety arrangement 201 on the wearable 200. The actuator 202 is instructed to initiate deployment of the inflatable airbag 204 that is part of the first safety arrangement 201 on the wearable 200. The airbag 204 deploys and forms a protection to one or more body parts of the user. The right-hand part of Fig. 1 discloses the wearable 200 with a deployed airbag 204'.

Accordingly, the vehicle safety system 1 according to the invention provides deployment of the safety system 201 of the wearable 200 based on a detected crash of the vehicle 100. The wearable 200 is responsive to the condition of the vehicle 100 rather than being responsive to the condition of the person wearing the wearable 200. Should the ECU on the vehicle 100 determine that the vehicle 100 is subjected to a crash, this information will be communicated from the vehicle 100 via the crash detection master communication device 500 of the vehicle 100 to the slave communication device 600 of the wearable 200. This allows a faster deployment of the first safety arrangement 201 that protects the wearer as compared to known systems which are designed to react on an abnormal movement of the wearers body. Accordingly, the safety system 201 of the wearable 200 is controlled based on a determined crash of the vehicle 100 and not based on how the body of the wearer that uses the wearable 200 is forced to move due to the vehicle crash. In addition, the activation time of the actuator 202 on the wearable 200 may be further adjusted by the ECU on the vehicle 100, depending on determined occupant weight or size or determined crash severity to allow optimal interaction between the wearable 200 and the vehicle safety system 101.

The crash detection master communication device 500 may be configured to synchronize deployment of the first safety arrangement 201 and any second safety arrangement 101 that is arranged in the vehicle 100. The synchronization may be set so that the first and second safety arrangements 101; 201 are deployed simultaneously or in sequence. As a typical example, the safety arrangement 101 on a motorcycle may be deployed to form an airbag 104 that fills the interspace between the steering column and the driver's torso, whereas the safety arrangement 201 on a wearable 200 may deploy to form an airbag 204 that protects the driver's neck, shoulders, head, and face.

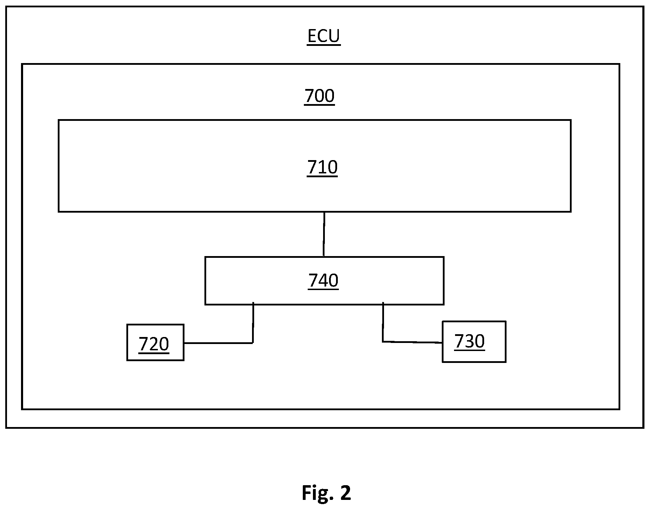

Now turning to Fig. 2, one example of the overall design of an ECU according to the invention is disclosed. The ECU, no matter if it is the ECU on the vehicle or on the wearable comprises a circuitry 700. The circuitry 700 may comprise one or more of a memory 710, a processing unit 720, a transceiver 730, and a data bus 740. The processing unit 720 may comprise a central processing unit (CPU) and/or a graphical processing unit (GPU). The transceiver 730 may be configured to communicate with external devices such as the one or more sensors 106 or with the crash detection master communication device 500 and/or the slave communication device 600.

The one or more sensors 106 or master/slave communication devices 500; 600 may be configured to communicate with the circuitry 700 via the data bus 740 and/or the transceiver 730. The transceiver 730 may be configured to communicate with servers, computer external peripherals (e.g., external storage), etc. The external devices may be local devices or remote devices. A non-limiting example of such devices is the central ECU of the vehicle 100. The transceiver 730 may be configured to communicate with the external devices via an external network, e.g., a local-area network, the internet, etc. The transceiver 730 may be configured for wireless and/or wired communication. Suitable technologies for wireless communication are known to the skilled person. Some non-limiting examples comprise Wi-Fi, Bluetooth^{®} and Near-Field Communication (NFC). Suitable technologies for wired communication are known to the skilled person. Some non-limiting examples comprise USB, Ethernet, Firewire, SPI, and I²C. One or more of the memory 710, the processing unit 720 and the transceiver 730, may communicate via the data bus 740. The memory 710 may be a non-transitory computer-readable storage medium. The memory 710 may be a random-access memory. The memory 710 may be a non-volatile memory. The memory 710 may store program code portions corresponding to one or more functions. The functions may by way of example be to generate and evaluate presence data to determine if a person wearing the wearable 200 is within a set distance range from the vehicle 100, if the vehicle 100 is on or off, if the vehicle 100 is in movement or not, if the vehicle 100 is subjected to a crash or not, the type of crash, and also severity of the crash.

The program code portions may be executable by the processing unit 720, which thereby performs the functions. It is to be understood that one or more functions of the circuitry 700 may be hardware implemented and/or implemented in a specific integrated circuit. For example, one or more functions may be implemented using field-programmable gate arrays (FPGAs). Put differently, one or more functions of the circuitry may be implemented in hardware or software, or as a combination of the two.

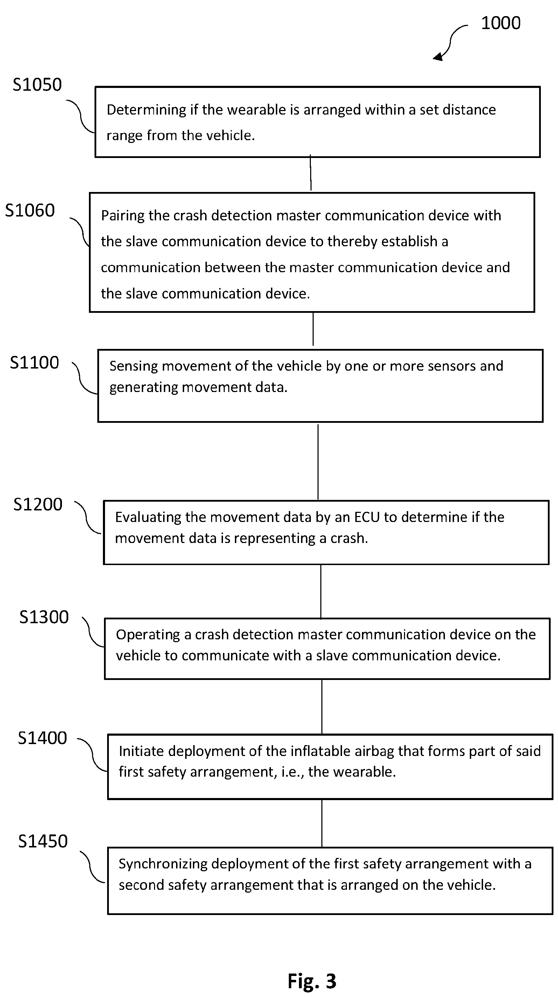

Now turning to Fig. 3, a flow chart is provided that illustrates one embodiment of a method 1000 of operating the vehicle safety system 1 that has been described above. The method 1000 comprises the following steps:
Sensing 51100 movement of the vehicle 100 by one or more sensors 106 and generating movement data.

Evaluating S1200 the movement data by an ECU to determine if the movement data is representing a crash.

In the event it is determined by the ECU that the movement data is representing a crash, operating S1300 a crash detection master communication device 500 on the vehicle 100 to communicate with a slave communication device 600 that is operable connected to the actuator 202 of the first safety arrangement 201 on the wearable 200, to thereby initiate S1400 deployment of the inflatable airbag 204 that forms part of said first safety arrangement 201, i.e., the wearable 200.

The method 1000 may comprise the additional step of determining S1050 if the wearable 200 is arranged within a set distance range from the vehicle 100 or if there are any other pairing constraints

If it is confirmed that the wearable 200 is arranged within the set distance range, pairing S1060 the crash detection master communication device 500 with the slave communication device 600 to thereby establish a communication between the master communication device 500 and the slave communication device 600.

In the event of a determined crash, the method may comprise the additional step of synchronizing S1450 deployment of the first safety arrangement 201 with a second safety arrangement 101 that is arranged on the vehicle 100. Synchronization shall be understood as deployment at the same time or within a specific time pattern defined by the method depending on e.g., the occupant's size, weight, type of paired wearable 200 and determined crash severity.

The method 1000 is initiated in connection to starting the vehicle 100 and is configured to run continuously during operation of the vehicle 100, i.e., when the ignition of the vehicle 100 is on, or at least during movement of the vehicle 100.

The steps of the method 1000 may be performed in any order suitable.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure and the appended claims. By way of example, the ECU on the wearable may be configured to apply two different crash detection methods or crash detection sensitivity methods. The two methods may be applied depending on if the ECU on the wearable is in communication or not with the crash detection master communication device. Hence, one method may be applied if the wearable is paired with the ECU on the vehicle and one method may be applied if the wearable is used but not paired, which may be the case if the wearable is used together with a non-compatible vehicle or if communication with the vehicle should be lost.

The ECU may be configured to apply two different crash detection methods or crash detection sensitivity methods. The two methods may be applied separately depending on if the ECU is in communication or not with the ECU on the wearable.

The pairing communication between the crash detection master communication device and the slave communication device may comprise a message, i.e., data, providing information from the slave communication device to the crash detection master communication device about the type of garment and the type of first safety arrangement that is arranged in the wearable, so that the ECU can adjust the activation time of the first safety arrangement to ensure an optimal protection during the crash.

The ECU can be configured to be in communication with one or several wearables.

## Claims

1. A method (1000) of operating a vehicle safety system, the method (1000) comprising:
sensing (51100) movement of a vehicle (100) by one or more sensors (106; 205; 150) and generating movement data;
evaluating (S1200) the movement data by an ECU (Electronic Control Unit) to determine if the movement data is representing a crash; and
in the event it is determined by the ECU that the movement data is representing a crash, operating a crash detection master communication device (500) of the vehicle (100) to communicate with a slave communication device (600) that is operable connected to an actuator (202) of a first safety arrangement (201) that is arranged in a wearable (200), to thereby initiate deployment of an inflatable airbag (204) forming part of said first safety arrangement (201).

2. The method according to claim 1, comprising the additional step of determining (S1050) if the wearable (200) is arranged within a set distance range from the vehicle (100); and
if it is confirmed that the wearable (200) is arranged within the set distance range, pairing the crash detection master communication device (500) with the slave communication device (600) to thereby establish a communication with the slave communication device (600).

3. The method of claim 1 or 2, wherein the crash detection master communication device (500) is configured to synchronize deployment of the first safety arrangement (201) and a second safety arrangement (101) that is arranged in the vehicle (100), said second safety arrangement (101) comprising an actuator (102) and an inflator (103) arranged in communication with an inflatable airbag (104), where said actuator (102) is arranged in communication with the crash detection master communication device (500).

4. A vehicle safety system (1) comprising:
a wearable (200) comprising a first safety arrangement (201) comprising an actuator (202), and an inflator (203) arranged in communication with the inflatable airbag (204);
one or more sensors (106; 205); and
an ECU (Electronic Control Unit) configured to evaluate sensor data from the one or more sensors (106; 205) to determine a vehicle crash; wherein
the vehicle safety system (1) further comprises a crash detection master communication device (500) configured to be arranged on a vehicle (100), which in the event the ECU should determine a vehicle crash, is configured to communicate with a slave communication device (600) that is operable connected to the actuator (202) of the first safety arrangement (201) to thereby initiate deployment the first safety arrangement (201).

5. The vehicle safety system according to claim 4, wherein the vehicle (100) comprises a second safety arrangement (101) comprising an actuator (102) and an inflator (103) arranged in communication with an inflatable airbag (104), and wherein the actuator (102) is arranged in communication with the crash detection master communication device (500).

6. The vehicle safety system according to any of claims 4-5, wherein the crash detection master communication device (500) is configured to synchronize deployment of the first and second safety arrangements (201; 101); or to apply a predefined delay depending on determined occupant size or determined crash severity.

7. The vehicle safety system according to claim 4, wherein the ECU is a central ECU forming part of the vehicle (100).

8. The vehicle safety system according to claim 5, wherein the ECU is an ECU forming part of the second safety arrangement (101).

9. The vehicle safety system according to claim 4, wherein at least one of the one or more sensors (106) are arranged on the vehicle (100) and/or wherein at least one of the one or more sensors (205) are arranged on the wearable (200).

10. The vehicle safety system according to claim 4, wherein the crash detection master communication device (500) is configured to pair with and establish a communication with the slave communication device (600) when the wearable (200) is arranged within a set distance range from the vehicle (100).

11. The vehicle safety system according to claim 9 and 10, wherein the wearable (200) comprises an ECU (ECU-W) configured to determine a crash based on sensor data from the one or more sensors (205) on the wearable (200) and to cause the first safety arrangement (201) to deploy in the event the crash detection master communication device (500) is not in communication with the slave communication device (600).

12. A wearable (200) to be used in a vehicle safety system according to any of claims 4-11, wherein the wearable (200) is a helmet or a garment, and wherein said wearable (200) comprises:
a first safety arrangement (201) comprising an actuator (202) and an inflator (203) that is arranged in communication with an inflatable airbag (204); and
a slave communication device (600) configured to communicate with a remote crash detection master communication device (500), and wherein the slave communication device (600) is operable connected to the actuator (202) of the first safety arrangement (201) to thereby allow initiation of a deployment the first safety arrangement (201).

13. A non-transitory computer readable storage medium having stored thereon instructions for implementing the method according to any of claims 1-3, when executed on a device having processing capabilities.

14. A software comprising the steps of the method according to any of claims 1-3.
